# FASCICULE DE BREVET EUROPEEN

(11) **EP 3 620 687 B1**
(45) Date de publication et mention de la délivrance du brevet: **26.05.2021**
(21) Numéro de dépôt: 19195739.8
(22) Date de dépôt: 05.09.2019
(51) Int. Cl.: F16H 61/28, B64C 25/40

(54) **PROCEDE D'ENGAGEMENT DE DEUX ELEMENTS ENGRENAGE ET DISPOSITIF D'ENTRAINEMENT METTANT EN OEUVRE UN TEL PROCEDE**
VERBINDUNGSVERFAHREN VON ZWEI VERZAHNUNGSELEMENTEN UND ANTRIEBSVORRICHTUNG, BEI DER DIESES VERFAHREN ANGEWANDT WIRD
METHOD FOR ENGAGING TWO GEAR DRIVE ELEMENTS AND DRIVE DEVICE IMPLEMENTING SUCH A METHOD

(30) Priorité: 05.09.2018 FR 1857978
(43) Date de publication de la demande: 11.03.2020
(73) Titulaire: Safran Landing Systems, 78140 Vélizy-Villacoublay (FR)
(72) Inventeur: FRAIM, Julien, 77550 MOISSY-CRAMAYEL (FR); GIRAUD, Frédérik, 77550 MOISSY-CRAMAYEL (FR); MARTIN, Frédéric, 77550 MOISSY-CRAMAYEL (FR); VEILLON, Alexandre, 77500 MOISSY-CRAMAYEL (FR)
(74) Mandataire: Lavialle, Bruno François Stéphane

(56) Documents cités:
- GB-A- 2 524 763
- US-A1- 2012 312 112

## Description

La présente invention concerne le domaine de la transmission motorisée de mouvements et plus particulièrement un procédé d'engagement de deux éléments engrenage. L'invention concerne également un dispositif d'entraînement notamment, bien que non exclusivement, d'une roue d'aéronef mettant en œuvre un tel procédé.

### ARRIERE-PLAN TECHNOLOGIQUE DE L'INVENTION

Dans le domaine de l'aviation, il est désormais prévu d'équiper les aéronefs d'organes d'entraînement en rotation des roues pour permettre le déplacement au sol de l'aéronef sans utiliser ses groupes motopropulseurs. Des organes d'entraînement montés sur un train d'atterrissage sont décrits dans les documents WO 2011/023505 et WO 2015/033160. Ces organes d'entraînement comportent un moteur électrique relié à un réducteur dont la sortie est équipée d'un pignon à rouleaux. Le pignon coopère avec une couronne dentée solidaire de la roue d'aéronef. De cette manière, le moteur électrique entraîne en rotation le pignon, qui entraîne à son tour la couronne dentée et donc la roue pour déplacer l'aéronef.

D'autres organes d'entraînement avec des roues dentées sont décrits dans les documents GB-A-2524763 et US-A1-2012/312112. Ces documents ne divulguent pas la détection d'une position angulaire relative entre deux roues dentées. Pour des questions de sécurité, il est prévu, notamment au décollage et à l'atterrissage de l'aéronef, de désolidariser le pignon et la couronne dentée. Pour cela, des moyens d'actionnement assurent le déplacement du pignon entre une position de dégagement dans laquelle le pignon est éloigné de la couronne dentée, et une position d'engrènement dans laquelle le pignon entraîne en rotation ladite couronne.

Toutefois, lors de l'engagement du pignon en rotation sur la couronne, une portion périphérique d'au moins un des rouleaux dudit pignon risque de taper sur des portions supérieures de dents de la couronne, ce qui engendre des efforts ponctuels importants transmis à l'ensemble des organes d'entraînement mais aussi à la structure du train d'atterrissage de l'aéronef. Pour éviter toute dégradation de ces organes d'entraînement (comme par exemple la rupture d'une dent de la couronne ou bien encore le dysfonctionnement d'un rouleau du pignon), lesdits organes sont généralement surdimensionnés, ce qui entraîne une augmentation de la masse et du coût desdits organes.

### OBJET DE L'INVENTION

L'invention a donc pour objet de proposer un moyen pour limiter les efforts remontant à travers deux engrenages lors de leur accouplement, et d'obvier au moins en partie aux inconvénients précités.

### PRESENTATION DE L'INVENTION

A cet effet, l'invention propose un procédé d'engagement d'un premier élément d'engrenage avec un deuxième élément d'engrenage, au moins le deuxième élément d'engrenage étant monté mobile entre une position d'engrènement et une position de dégagement à l'aide d'un actionneur.

Selon l'invention, le procédé d'engagement comporte l'étape d'entraîner au moins l'un des éléments d'engrenage en rotation pour ménager un écart de vitesse de rotation non nul entre lesdits éléments d'engrenage. Le procédé comporte également l'étape de commander l'actionneur pour successivement :
- déplacer au moins le deuxième élément d'engrenage vers la position d'engrènement,
- quand est détectée une position intermédiaire du deuxième élément d'engrenage à proximité du premier élément d'engrenage, dans laquelle ledit deuxième élément d'engrenage reste suffisamment éloigné du premier élément d'engrenage pour empêcher tout contact entre eux, stopper le déplacement du deuxième élément d'engrenage,
- quand est détectée une position angulaire d'engagement mutuel desdits éléments d'engrenage dans laquelle le deuxième élément d'engrenage est sensiblement en phase avec le premier élément d'engrenage pour engrener celui-ci, déplacer ledit deuxième élément d'engrenage jusqu'à la position d'engrènement.

Ainsi, le déplacement du deuxième élément d'engrenage est arrêté dès sa détection à proximité du premier élément d'engrenage, ce qui permet de rapprocher au maximum les éléments d'engrenage sans risquer un contact entre eux et d'attendre que lesdits éléments d'engrenage soient en phase avant d'amener le deuxième élément d'engrenage dans la position d'engrènement. La course d'engagement et donc le temps d'engrènement sont ainsi réduits et le risque d'un choc est limité voire éliminé.

Selon un mode de réalisation préféré de l'invention, l'actionneur comprend un vérin ayant une tige pilotée par une servovalve et reliée au deuxième élément d'engrenage. Ainsi :
- une augmentation du débit dans la servovalve permet d'atteindre une pression prédéterminée et de déplacer la tige du vérin vers la position d'engrènement,
- un capteur de position permet la détection de la position intermédiaire du deuxième élément d'engrenage par rapport au premier élément d'engrenage, une modification du débit de la servovalve permettant alors de stopper le déplacement de la tige du vérin,
- un premier capteur de position angulaire du premier élément d'engrenage et un deuxième capteur de position angulaire du deuxième élément d'engrenage permettent de détecter la position angulaire idéale d'engagement desdits éléments d'engrenage, une augmentation du débit dans la servovalve jusqu'à un débit maximum permettant alors d'amener la tige du vérin jusqu'à la position d'engrènement.

L'invention concerne également un dispositif d'entraînement comprenant :
- un premier élément d'engrenage,
- un deuxième élément d'engrenage mobile entre une position d'engrènement avec le premier élément d'engrenage et une position de dégagement à l'aide d'un actionneur,
- un moteur entraînant en rotation l'un des éléments d'engrenage,
- des premiers moyens de détection d'une position intermédiaire du deuxième élément d'engrenage par rapport au premier élément d'engrenage,
- des deuxièmes moyens de détection d'un écart de position angulaire entre le premier élément d'engrenage et le deuxième élément d'engrenage,
- une unité électronique de commande reliée à l'actionneur, au moteur, aux premiers moyens de détection et aux deuxièmes moyens de détection.

Selon l'invention, l'unité de commande est agencée pour mettre en œuvre le procédé précédent.

Selon un mode de réalisation préféré de l'invention, l'actionneur comprend un vérin ayant une tige reliée au deuxième élément d'engrenage, une servovalve pilote le vérin, les premiers moyens de détection comportent un capteur de position de la tige et les deuxièmes moyens de détection comportent un capteur de position angulaire du premier élément d'engrenage et un capteur de position angulaire du deuxième élément d'engrenage.

De manière particulière, le capteur de position angulaire du premier élément d'engrenage et le capteur de position angulaire du deuxième élément d'engrenage sont des capteurs à effet Hall.

Selon une caractéristique particulière, le vérin est un vérin hydraulique.

Selon une autre caractéristique particulière, le moteur est un moteur électrique.

Selon un mode de réalisation préféré de l'invention, le premier élément d'engrenage est une couronne dentée et le deuxième élément d'engrenage est un pignon à rouleaux.

De manière particulière, la couronne dentée est solidaire d'une roue.

L'invention concerne aussi un train d'atterrissage équipé d'un tel dispositif.

### DESCRIPTION DES FIGURES

L'invention sera mieux comprise à la lumière de la description qui suit, laquelle est purement illustrative et non limitative, et doit être lue en regard des figures annexées, parmi lesquelles :
- la figure 1 représente schématiquement un dispositif d'entraînement selon un mode de réalisation particulier de l'invention, le deuxième élément d'engrenage étant dans la position de dégagement,
- la figure 2a est une vue partielle du dispositif illustré à la figure 1 dans laquelle le deuxième élément d'engrenage est dans la position avancée,
- la figure 2b est une vue partielle du dispositif illustré à la figure 1 dans laquelle le deuxième élément d'engrenage est dans la position d'engrènement,
- la figure 3 représente schématiquement le procédé de l'invention,
- la figure 4 représente au cours du temps le déplacement de la tige du vérin et la pression régnant à l'intérieur du vérin lors de la mise en œuvre du procédé de l'invention illustré à la figure 3.

### DESCRIPTION DETAILLEE D'UN MODE DE REALISATION PARTICULIER DE L'INVENTION

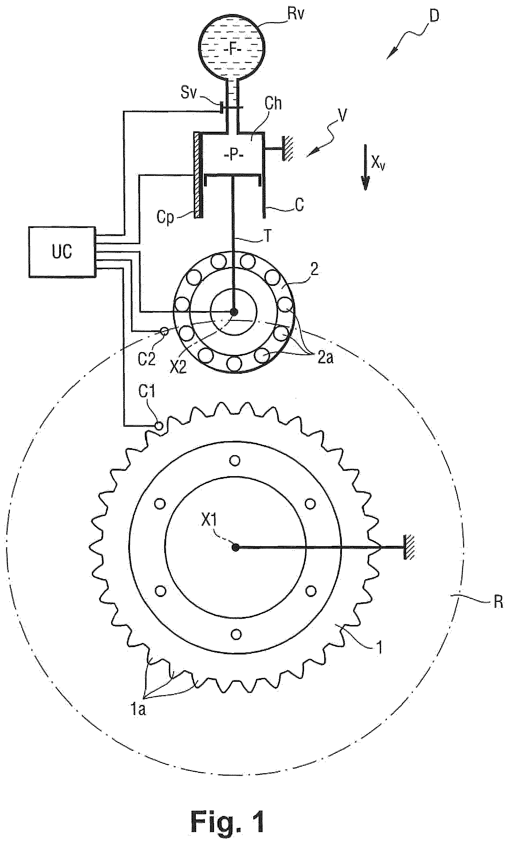

En référence à la figure 1, un train d'atterrissage d'un aéronef est équipé d'un dispositif d'entraînement D selon un mode de réalisation particulier de l'invention. Le train d'atterrissage comprend une jambe comportant un caisson pourvu de moyens de sa liaison à la structure de l'aéronef et une tige coulissant dans le caisson et ayant une extrémité libre pourvue d'un moyeu d'une roue R.

Le dispositif d'entraînement D comporte une couronne 1 dentée comprenant une rangée de dents la. La couronne 1 forme un premier élément d'engrenage solidaire de la roue R de l'aéronef, la couronne 1 et la roue R ayant un même axe de rotation X1.

Le dispositif d'entraînement D comporte également un pignon 2 comprenant une pluralité de rouleaux 2a équitablement répartis autour d'un axe de rotation X2 qui est parallèle à l'axe de rotation X1. Le pignon 2 à rouleaux 2a forme un deuxième élément d'engrenage solidaire d'un arbre de sortie d'un réducteur associé à un moteur électrique.

Le pignon 2 est relié au niveau de l'axe de rotation X2 à une extrémité libre d'une tige d'un vérin V hydraulique. Le vérin V comporte un corps C solidaire du train d'atterrissage et à l'intérieur duquel peut se déplacer la tige T suivant un axe Xv orthogonal aux axes de rotation X1, X2. Une extrémité de la tige T formant piston délimite avec le corps C du vérin une chambre Ch. La chambre Ch est raccordée via une servovalve Sv à un réservoir Rv contenant un fluide F sous pression. La servovalve Sv permet de réguler une pression P à l'intérieur de la chambre Ch du vérin V, soit un déplacement Dp de la tige T.

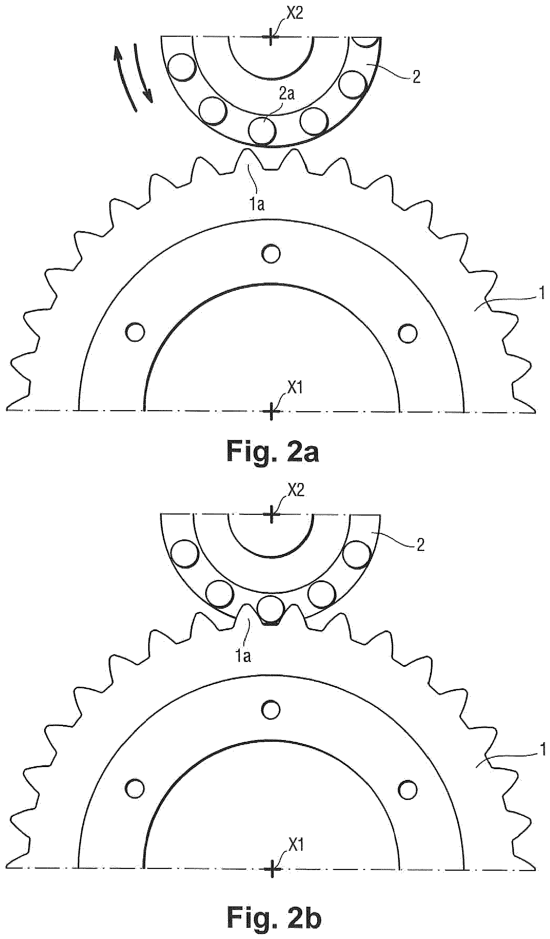

Le pignon 2 est ainsi monté mobile entre une position de dégagement illustrée à la figure 1 dans laquelle le pignon 2 est éloigné de la couronne 1, et une position d'engrènement illustrée à la figure 2b dans laquelle le pignon 2 est en phase avec la couronne 1 pour engrener celle-ci.

Le vérin V est équipé d'un capteur Cp électromagnétique s'étendant le long du corps C du vérin pour détecter le champ magnétique d'un aimant permanent intégré à l'extrémité de la tige T formant piston. A cet effet, le capteur Cp permet de déterminer la position de la tige T suivant l'axe Xv.

Le dispositif d'entraînement D comprend un capteur C1 à effet Hall solidaire de la structure du moteur électrique et devant lequel défilent les dents la de la couronne 1 en rotation. La détection de la présence de dents la par le capteur C1 permet de déterminer une position angulaire de la couronne 1 par rapport à l'axe de rotation X1.

Le dispositif d'entraînement D comprend également un capteur C2 à effet Hall solidaire de la tige T du vérin V et devant lequel défilent les rouleaux 2a du pignon 2 en rotation. La détection de la présence de rouleaux 2a par le capteur C2 permet de déterminer une position angulaire du pignon 2 par rapport à l'axe de rotation X2.

De par la comparaison de leur changement d'état, les capteurs C1, C2 forment des moyens de détection d'un écart de position angulaire entre la couronne 1 et le pignon 2.

Une unité électronique de commande UC est reliée à la servovalve Sv, au moteur électrique entraînant en rotation le pignon 2, au capteur Cp de position de la tige et aux capteurs C1, C2 de position angulaire des éléments d'engrenage 1, 2.

Le procédé d'engagement du pignon 2 avec la couronne 1 va maintenant être détaillé.

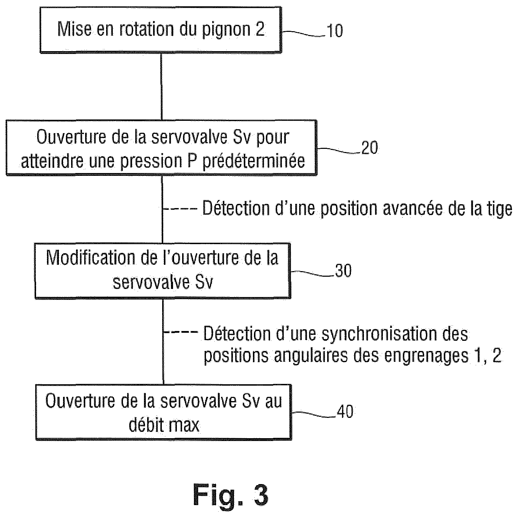

Comme illustré à la figure 3, une première étape 10 consiste en ce que l'unité de commande UC contrôle le moteur électrique pour entraîner en rotation le pignon 2 de façon à ménager un écart de vitesse non nul entre ledit pignon 2 et la couronne 1. L'écart de vitesse est préférentiellement supérieur à 3 rpm (rotation par minute) pour éviter qu'un rouleau 2a du pignon 2 soit en permanence en face d'une dent la de la couronne 1. Cet état correspond sensiblement à la somme en valeur absolue des imprécisions sur les mesures et les commandes de vitesses de rotation du pignon 2 et de la couronne 1. Il peut aussi être préférable de limiter cet écart de vitesse ou bien encore le couple délivré par le moteur électrique pour minimiser les efforts au moment du contact entre la couronne 1 et le pignon 2. Cette limitation peut notamment être déterminée en fonction de l'architecture du pignon 2 et de la couronne 1 ou bien encore des performances recherchées du dispositif d'entraînement D. Néanmoins, plus l'écart de vitesse entre la couronne 1 et le pignon 2 est important, plus la durée pendant laquelle un engagement sans choc entre ladite couronne 1 et ledit pignon 2 peut être envisagé est courte. Ainsi, un écart de vitesse sensiblement égal à 4 rpm et un couple maximum de 1800 newton-mètre sont préférés.

Lors d'une deuxième étape 20, le débit de la servovalve Sv est augmenté par l'unité de commande UC pour atteindre dans la chambre Ch du vérin V une pression P suffisante pour déplacer la tige T du vérin V. Le pignon 2 se déplace alors à une vitesse sensiblement constante vers la position d'engrènement jusqu'à ce que l'unité de commande UC détecte via le capteur Cp de position une position intermédiaire de la tige T. Le capteur Cp peut être un capteur de position ou un capteur de distance permettant de détecter l'arrivée du pignon 2 dans la position intermédiaire de la tige T.

Dès lors, l'unité de commande UC modifie, lors d'une troisième étape 30, le débit de la servovalve Sv de façon à stopper l'avancement de la tige T vers la position d'engrènement. La troisième étape 30 a pour but de rapprocher au maximum le pignon 2 de la couronne 1 tout en gardant un espace suffisamment important entre eux pour empêcher tout contact en attendant que ledit pignon 2 et ladite couronne 1 soient en phase pour amener le pignon 2 dans la position d'engrènement. La distance restante à parcourir par la tige T pour amener le pignon 2 en position d'engrènement est alors réduite au minimum. La position intermédiaire de la tige T est définie en tenant compte des caractéristiques des différents éléments composant le dispositif d'entraînement D pour éviter un contact fortuit du pignon 2 et de la couronne 1, par exemple en raison des vibrations et/ou des chocs subis par le train d'atterrissage et plus particulièrement par lesdits composants. Les caractéristiques prises en compte comprennent :
- la déformabilité des éléments composant le dispositif d'entraînement D ;
- les jeux de montage et de fonctionnement de ceux-ci et plus particulièrement de la tige T, de la couronne1 et du pignon 2 ;
- la précision du capteur Cp de position ;
- la précision de la chaîne de commande dont l'unité de commande UC et la servovalve Sv ; et
- la précision du vérin V en position.

L'unité de commande UC compare ensuite les changements d'état des capteurs C1, C2 de position angulaire de la couronne 1 et du pignon 2. Dès que l'unité de commande UC observe une synchronisation appropriée des positions angulaires de la couronne 1 et du pignon 2, le débit de la servovalve est alors, lors d'une quatrième étape 40, augmenté jusqu'à un débit maximum de façon à déplacer le plus rapidement possible la tige T vers la position d'engrènement afin que ladite tige T parcourt la distance restante pour amener le pignon 2 en position d'engrènement avant la fin de la durée pendant laquelle un engagement sans choc est possible. Un débit maximum sensiblement égal à 10 litres par minute est préféré. La synchronisation appropriée des positions angulaires de la couronne 1 et du pignon 2 correspond par exemple à un moment où une dent la de la couronne 1 est sensiblement en face d'un creux formé entre deux rouleaux 2a du pignon 2, ou bien encore à un moment où un rouleau 2a du pignon 2 est sensiblement en face d'un creux formé entre deux dents la de la couronne 1.

Le pignon 2 étant alors sensiblement en phase avec la couronne 1, le déplacement Dp rapide de la tige T du vérin V permet au pignon 2 d'atteindre la position d'engrènement. Dès lors, la pression P à l'intérieur de la chambre Ch du vérin V augmente jusqu'à atteindre sensiblement la pression du fluide F contenu dans le réservoir Rv.

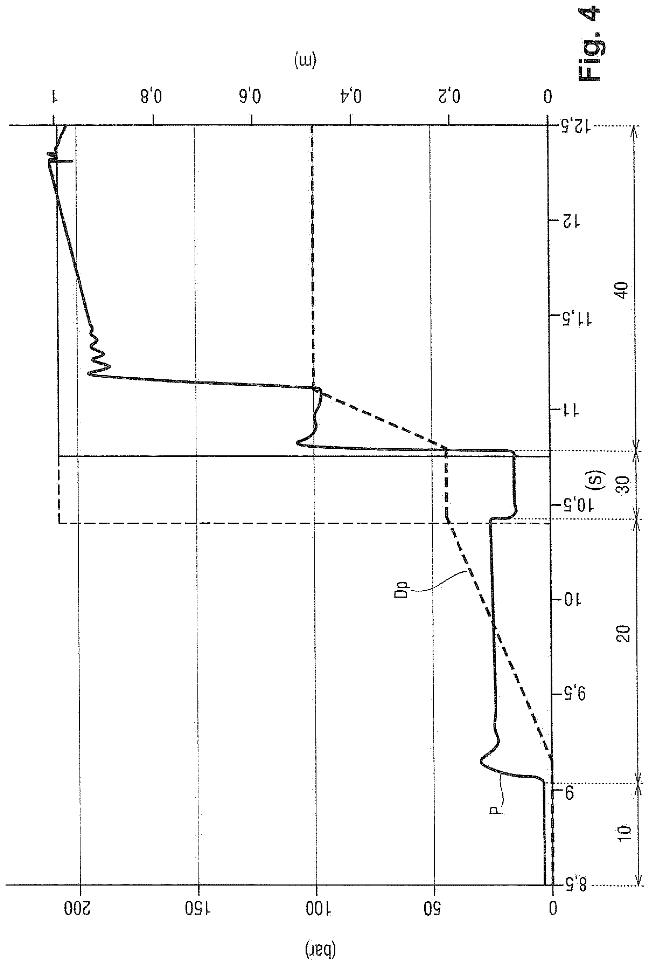

La figure 4 illustre le déplacement Dp de la tige T du vérin V entre la position de dégagement et la position d'engrènement ainsi que l'évolution de la pression P à l'intérieur de la chambre Ch du vérin V au cours des étapes 10, 20, 30, 40.

Bien entendu, l'invention n'est pas limitée au mode de réalisation décrit mais englobe toute variante entrant dans le champ de l'invention telle que définie par les revendications.

La position du pignon 2 et de la couronne 1 dans le dispositif d'entraînement D peut notamment être inversée.

Bien qu'ici le deuxième élément d'engrenage soit un pignon à rouleaux, un autre type de pignon peut être envisagé comme par exemple un pignon équipé de dents.

Bien qu'ici le mouvement pour engager le pignon avec la couronne soit un mouvement de translation, un mouvement de rotation peut aussi être envisagé.

L'axe Xv suivant lequel se déplace la tige T du vérin V peut ne pas être orthogonal à l'axe de rotation X1 de la couronne dentée.

De même, si l'engagement entre le pignon et la couronne est ici radial, il peut très bien être axial ou tangentiel (cas notamment des engrenages coniques).

Bien qu'ici le vérin V soit ici hydraulique, l'utilisation d'un vérin pneumatique associé à une électrovanne est tout aussi envisageable pour un fonctionnement similaire au mode de réalisation décrit.

Il est également possible de remplacer le vérin V et la servovalve Sv par un actionneur électromécanique, comme par exemple un moteur électrique associé à une chaîne mécanique reliée au pignon. Le blocage du moteur en position ou en vitesse nulle permet alors de stopper le déplacement du pignon.

La détermination de la position angulaire de la couronne 1 et/ou du pignon 2 peut aussi être réalisée via des codeurs rotatifs incrémentaux.

Bien qu'ici le capteur Cp de position de la tige T soit électromagnétique, d'autres types de capteur peuvent être choisis en fonction de l'architecture du dispositif d'entraînement et des contraintes associées (hydraulique, pneumatique, électromécanique, électrique, optique ou optronique...) . Il est également possible d'effectuer une mesure de distance, notamment entre le diamètre extérieur de la couronne et celui du pignon.

## Revendications

1. Procédé d'engagement d'un premier élément d'engrenage (1) avec un deuxième élément d'engrenage (2), au moins le deuxième élément d'engrenage (2) étant monté mobile entre une position d'engrènement et une position de dégagement à l'aide d'un actionneur (V), le procédé d'engagement comportant l'étape d'entraîner au moins l'un des éléments d'engrenage en rotation pour ménager un écart de vitesse de rotation non nul entre lesdits éléments d'engrenage et l'étape de commander l'actionneur (V) pour successivement :
- déplacer au moins le deuxième élément d'engrenage vers la position d'engrènement,
- quand est détectée une position intermédiaire du deuxième élément d'engrenage à proximité du premier élément d'engrenage, dans laquelle le deuxième élément d'engrenage reste suffisamment éloigné du premier élément d'engrenage pour empêcher tout contact entre eux, stopper le déplacement dudit deuxième élément d'engrenage,
- quand est détectée une position angulaire d'engagement mutuel desdits éléments d'engrenage dans laquelle le deuxième élément d'engrenage est sensiblement en phase avec le premier élément d'engrenage pour engrener celui-ci, déplacer ledit deuxième élément d'engrenage jusqu'à la position d'engrènement.

2. Procédé d'engagement selon la revendication 1, dans lequel l'actionneur comprend un vérin (V) ayant une tige (T) pilotée par une servovalve (Sv) et reliée au deuxième élément d'engrenage, et dans lequel :
- une augmentation du débit dans la servovalve (Sv) permet d'atteindre une pression prédéterminée et de déplacer la tige (T) du vérin (V) vers la position d'engrènement,
- un capteur de position (Cp) permet la détection de la position intermédiaire du deuxième élément d'engrenage par rapport au premier élément d'engrenage, une modification du débit de la servovalve (Sv) permettant alors de stopper le déplacement (Dp) de la tige (T) du vérin (V),
- un premier capteur (C1) de position angulaire du premier élément d'engrenage (1) et un deuxième capteur (C2) de position angulaire du deuxième élément d'engrenage (2) permettent de détecter la position angulaire d'engagement desdits éléments d'engrenage, une augmentation du débit dans la servovalve jusqu'à un débit maximum permettant alors d'amener la tige (T) du vérin (V) jusqu'à la position d'engrènement.

3. Dispositif d'entraînement, comprenant un premier élément d'engrenage (1), un deuxième élément d'engrenage (2) mobile entre une position d'engrènement avec le premier élément d'engrenage et une position de dégagement à l'aide d'un actionneur (V), un moteur entraînant en rotation l'un des éléments d'engrenage, des premiers moyens de détection (Cp) d'une position intermédiaire du deuxième élément d'engrenage (2) par rapport au premier élément d'engrenage, des deuxièmes moyens de détection (C1, C2) d'un écart de position angulaire entre le premier élément d'engrenage et le deuxième élément d'engrenage, une unité électronique de commande (UC) reliée à l'actionneur (V), au moteur, aux premiers moyens de détection (Cp) et aux deuxièmes moyens de détection, **caractérisé en ce que** l'unité de commande (UC) est agencée pour mettre en œuvre le procédé selon l'une des revendications précédentes.

4. Dispositif d'entraînement selon la revendication 3, dans lequel l'actionneur (V) comprend un vérin (V) ayant une tige (T) reliée au deuxième élément d'engrenage (2), une servovalve (Sv) pilote le vérin (V), les premiers moyens de détection comportent un capteur de position (Cp) de la tige (T) et les deuxièmes moyens de détection comportent un capteur (C1) de position angulaire du premier élément d'engrenage (1) et un capteur (C2) de position angulaire du deuxième élément d'engrenage (2).

5. Dispositif d'entraînement selon la revendication 4, dans lequel le capteur (C1) de position angulaire du premier élément d'engrenage (1) et le capteur (C2) de position angulaire du deuxième élément d'engrenage (2) sont des capteurs à effet Hall.

6. Dispositif d'entraînement selon l'une quelconque des revendications 4 et 5, dans lequel le vérin (V) est un vérin hydraulique.

7. Dispositif d'entraînement selon l'une quelconque des revendications 3 à 6, dans lequel le moteur est un moteur électrique.

8. Dispositif d'entraînement selon l'une quelconque des revendications 3 à 7, dans lequel le premier élément d'engrenage (1) est une couronne dentée et le deuxième élément d'engrenage (2) est un pignon à rouleaux.

9. Dispositif d'entraînement selon la revendication 8, dans lequel la couronne dentée (1) est solidaire d'une roue (R).

10. Train d'atterrissage équipé d'un dispositif d'entraînement selon l'une des revendications 3 à 9.

## Patentansprüche

1. Eingriffsverfahren zum Eingriff eines ersten Getriebeelements (1) in ein zweites Getriebeelement (2), wobei mindestens das zweite Getriebeelement (2) mit Hilfe eines Aktors (V) beweglich zwischen einer eingerückten Stellung und einer ausgerückten Stellung gelagert ist, wobei das Eingriffsverfahren den Schritt des Antreibens mindestens eines der Getriebeelemente in Drehung umfasst, um einen von Null verschiedenen Drehgeschwindigkeitsunterschied zwischen den genannten Getriebeelementen herzustellen, sowie den Schritt des Steuerns des Aktors (V) um nacheinander:
- mindestens das zweite Getriebeelement in die eingerückte Stellung zu bewegen,
- wenn eine Zwischenstellung des zweiten Getriebeelements in der Nähe des ersten Getriebeelements erfasst wird, in der das zweite Getriebeelement von dem ersten Getriebeelement ausreichend entfernt bleibt, um jeglichen Kontakt zwischen denselben zu verhindern, die Bewegung des genannten zweiten Getriebeelements zu stoppen,
- wenn eine Winkelstellung eines gegenseitigen Eingriffs der genannten Getriebeelemente erfasst wird, in der das zweite Getriebeelement im Wesentlichen in Phase mit dem ersten Getriebeelement ist, um in dieses einzugreifen, das genannte zweite Getriebeelement bis in die eingerückte Stellung zu bewegen.

2. Eingriffsverfahren nach Anspruch 1, bei dem der Aktor einen Zylinder (V) umfasst, der eine Stange (T) hat, die von einem Servoventil (Sv) gesteuert wird und die mit dem zweiten Getriebeelement verbunden ist, und bei dem:
- eine Erhöhung der Durchflussrate in dem Servoventil (Sv) ein Erreichen eines vorbestimmten Druckes und ein Verschieben der Stange (T) des Zylinders (V) in Richtung der eingerückten Stellung ermöglicht,
- ein Positionssensor (Cp) die Erfassung der Zwischenstellung des zweiten Getriebeelements in Bezug auf das erste Getriebeelement ermöglicht, wobei eine Modifikation der Durchflussrate in dem Servoventil (Sv) dann ein Stoppen der Verschiebung (Dp) der Stange (T) des Zylinders (V) ermöglicht,
- wobei ein erster Winkelpositionssensor (C1) zur Erfassung der Winkelstellung des ersten Getriebeelementes (1) und ein zweiter Winkelpositionssensor (C2) zur Erfassung der Winkelstellung des zweiten Getriebeelements (2) das Erfassen der Eingriffswinkelstellung der genannten Getriebeelemente ermöglicht, wobei eine Erhöhung der Durchflussrate in dem Servoventil bis zu einer maximalen Durchflussrate dann das Bringen der Stange (T) des Zylinders (V) bis in die eingerückte Stellung ermöglicht.

3. Antriebsvorrichtung, umfassend ein erstes Getriebeelement (1), ein zweites Getriebeelement (2), das mit Hilfe eines Aktors (V) zwischen einer in das erste Getriebeelement eingerückten Stellung und einer ausgerückten Stellung beweglich ist, einen Motor, der eines der Getriebeelemente in Drehung antreibt, erste Erfassungsmittel (Cp) zum Erfassen einer Zwischenstellung des zweiten Getriebeelements (2) in Bezug auf das erste Getriebeelement, zweite Erfassungsmittel (C1, C2) zum Erfassen einer Winkelstellungsdifferenz zwischen dem ersten Getriebeelement und dem zweiten Getriebeelement, eine elektronische Steuereinheit (UC), die mit dem Aktor (V), dem Motor, den ersten Erfassungsmitteln (Cp) und den zweiten Erfassungsmitteln verbunden ist, **dadurch gekennzeichnet, dass** die Steuereinheit (UC) so ausgebildet ist, dass sie das Verfahren nach einem der vorhergehenden Ansprüche durchführt.

4. Antriebsvorrichtung nach Anspruch 3, bei der der Aktor (V) einen Zylinder (V) umfasst, der eine Stange (T) hat, die mit dem zweiten Getriebeelement (2) verbunden ist, ein Servoventil (Sv) den Zylinder (V) steuert, die ersten Erfassungsmittel einen Positionssensor (Cp) zum Erfassen der Position der Stange (T) umfassen, und die zweiten Erfassungsmittel einen Winkelpositionssensor (C1) zum Erfassen der Winkelstellung des ersten Getriebeelements (1) und einen Winkelpositionssensor (C2) zum Erfassen der Winkelstellung des zweiten Getriebeelements (2) umfassen.

5. Antriebsvorrichtung nach Anspruch 4, bei der der Winkelpositionssensor (C1) des ersten Getriebeelements (1) und der Winkelpositionssensor (C2) des zweiten Getriebeelements (2) Hall-Effekt-Sensoren sind.

6. Antriebsvorrichtung nach einem der Ansprüche 4 und 5, bei der der Zylinder (V) ein Hydraulikzylinder ist.

7. Antriebsvorrichtung nach einem der Ansprüche 3 bis 6, bei der der Motor ein Elektromotor ist.

8. Antriebsvorrichtung nach einem der Ansprüche 3 bis 7, bei der das erste Getriebeelement (1) ein Zahnkranz und das zweite Getriebeelement (2) ein Rollen-Ritzel ist.

9. Antriebsvorrichtung nach Anspruch 8, bei der der Zahnkranz (1) fest mit einem Rad (R) verbunden ist.

10. Fahrwerk, das mit einer Antriebsvorrichtung nach einem der Ansprüche 3 bis 9 ausgestattet ist.

## Claims

1. Method for engaging a first gear element (1) with a second gear element (2), at least the second gear element (2) being mounted to be mobile between a meshing position and a position of disengagement using an actuator (V), the engagement method comprising the step of driving at least one of the gear elements in rotation to form a non-zero rotation speed difference between said gear elements and the step of controlling the actuator (V) to successively:
- displace at least the second gear element to the meshing position,
- when an intermediate position of the second gear element in proximity to the first gear element is detected, in which the second gear element remains sufficiently far away from the first gear element to prevent any contact between them, stop the displacement of said second gear element,
- when an angular position of mutual engagement of said gear elements is detected in which the second gear element is substantially in phase with the first gear element to mesh the latter, displace said second gear element to the meshing position.

2. Engagement method according to Claim 1, in which the actuator comprises a cylinder (V) having a rod (T) driven by a servo valve (Sv) and linked to the second gear element, and in which:
- an increase in the flow rate in the servo valve (Sv) makes it possible to achieve a predetermined pressure and to displace the rod (T) of the cylinder (V) to the meshing position,
- a position sensor (Cp) makes it possible to detect the intermediate position of the second gear element relative to the first gear element, a modification of the flow rate of the servo valve (Sv) then making it possible to stop the displacement (Dp) of the rod (T) of the cylinder (V),
- a first sensor (C1) of angular position of the first gear element (1) and a second sensor (C2) of angular position of the second gear element (2) make it possible to detect the angular position of engagement of said gear elements, an increase in the flow rate in the servo valve to a maximum flow rate then making it possible to bring the rod (T) of the cylinder (V) to the meshing position.

3. Driving device, comprising a first gear element (1), a second gear element (2) that is mobile between a position of meshing with the first gear element and a position of disengagement using an actuator (V), a motor driving one of the gear elements in rotation, first means (Cp) for detecting of an intermediate position of the second gear element (2) relative to the first gear element, second means (C1, C2) for detecting an angular position difference between the first gear element and the second gear element, an electronic control unit (UC) linked to the actuator (V), to the motor, to the first detection means (Cp) and to the second detection means, **characterized in that** the control unit (UC) is arranged to implement the method according to one of the preceding claims.

4. Driving device according to Claim 3, in which the actuator (V) comprises a cylinder (V) having a rod (T) linked to the second gear element (2), a servo valve (Sv) drives the cylinder (V), the first detection means comprise a sensor (Cp) of position of the rod (T) and the second detection means comprise a sensor (C1) of angular position of the first gear element (1) and a sensor (C2) of angular position of the second gear element (2).

5. Driving device according to Claim 4, in which the sensor (C1) of angular position of the first gear element (1) and the sensor (C2) of angular position of the second gear element (2) are Hall effect sensors.

6. Driving device according to either one of Claims 4 and 5, in which the cylinder (V) is a hydraulic cylinder.

7. Driving device according to any one of Claims 3 to 6, in which the motor is an electric motor.

8. Driving device according to any one of Claims 3 to 7, in which the first gear element (1) is a toothed crown ring and the second gear element (2) is a roller pinion.

9. Driving device according to Claim 8, in which the toothed crown ring (1) is secured to a wheel (R).

10. Landing gear equipped with a driving device according to one of Claims 3 to 9.
